(19) Europäisches Patentamt
European Patent Office
Office européen des brevets

(11) **EP 2 267 424 A2**

(12) **EUROPÄISCHE PATENTANMELDUNG**

(43) Veröffentlichungstag:
**29.12.2010 Patentblatt 2010/52**

(51) Int Cl.:
*G01K 7/42* *(2006.01)*   *G01K 13/02* *(2006.01)*
*G01K 1/12* *(2006.01)*   *G01K 1/12* *(2006.01)*

(21) Anmeldenummer: **10005097.0**

(22) Anmeldetag: **14.05.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **22.06.2009   DE 102009030206**

(71) Anmelder: **BorgWarner BERU Systems GmbH**
**71636 Ludwigsburg (DE)**

(72) Erfinder: **Schneider, Ulrich**
**74366 Kirchheim (DE)**

(74) Vertreter: **Twelmeier Mommer & Partner**
**Patent- und Rechtsanwälte**
**Westliche Karl-Friedrich-Strasse 56-68**
**75172 Pforzheim (DE)**

(54) **Verfahren zur Ermittlung der Abgastemperatur eines Fahrzeugmotors**

(57)    Die Erfindung betrifft ein Verfahren zur Ermittlung der Abgastemperatur eines Fahrzeugmotors mittels eines Temperaturfühlers, der einen Temperatursensor und ein den Temperatursensor umgebendes Schutzrohr, das in einen Abgasstrom hineinragt, aufweist, wobei mit dem Temperaturfühler eine Serie von Temperaturmesswerten erzeugt wird. Erfindungsgemäß ist vorgesehen, dass aus mehreren Temperaturmesswerten, die zeitlich aufeinanderfolgen, unter Verwendung einer Kenngröße der thermischen Trägheit des Temperaturfühlers ein korrigierter Temperaturwert berechnet wird. Die Erfindung betrifft ferner einen Temperaturfühler mit einer Auswerteinheit, die im Betrieb ein solches Verfahren ausführt.

Fig. 1

EP 2 267 424 A2

**Beschreibung**

Die Erfindung geht aus von einem Verfahren zur Ermittlung der Abgastemperatur eines Fahrzeugmotors mittels eines Temperaturfühlers, der einen Temperatursensor und ein den Temperatursensor umgebendes Schutzrohr, das in einen Abgasstrom hineinragt, aufweist. Ein solcher Temperaturfühler und ein Verfahren mit den im Oberbegriff des Anspruchs 1 angegebenen Merkmalen ist aus der DE 10 2006 034 248 B3 bekannt.

Die Einsatzbedingungen für Temperaturfühler im Abgasstrang von Verbrennungsmotoren sind schwierig. Sie sind gekennzeichnet durch hohe Temperaturen von über 600°C bis in die Nähe von 1000°C, durch schnelle Temperaturänderungen, z. B. durch Temperaturanstiege um 800°C in nur 5 Sekunden, durch Vibrationen und das Umspültwerden von aggressiven Medien.

Um diesen Belastungen Stand halten zu können, sind die Temperatursensoren von Temperaturfühlern zur Messung der Abgastemperatur in einem Schutzrohr eingeschlossen und üblicherweise in einem Füllmaterial, beispielsweise einem Pulver oder einer Vergussmasse, eingebettet. Diese Maßnahmen zum Schutz des Sensors erhöhen jedoch auch die Trägheit des Temperaturfühlers, so dass ein besserer Schutz des Sensors und damit eine erhöhte Lebensdauer in der Regel mit einer größeren Trägheit des Sensors erkauft werden.

Aufgabe der Erfindung ist es, einen Weg aufzuzeigen, wie die gegenläufigen Anforderungen einer möglichst langen Lebensdauer eines Temperaturfühlers und einer möglichst schnellen und präzisen Ermittlung der Abgastemperatur besser erfüllt werden können.

Diese Aufgabe wird durch ein Verfahren mit den im Anspruch 1 angegebenen Merkmalen sowie einem Temperaturfühler gemäß Anspruch 8 gelöst. Vorteilhafte Weiterbildungen der Erfindung sind Gegenstand von Unteransprüchen.

Bei dem erfindungsgemäßen Verfahren wird aus mehreren Temperaturmesswerten, die zeitlich aufeinanderfolgen, unter Verwendung einer Kenngröße der thermischen Trägheit des Temperaturfühlers ein korrigierter Temperaturwert berechnet. Vorteilhaft kann auf diese Weise mit einem robusten Temperaturfühler, der den hohen Belastungen im Abgasstrang eines Kraftfahrzeugs lange Zeit standhalten kann, die Abgastemperatur trotz einer erheblichen thermischen Trägheit des Temperaturfühlers schneller und präziser bestimmt werden.

Bei einer Änderung der Abgastemperatur vergeht stets eine gewisse Zeit, bis ein Temperaturfühler die Temperatur des umgebenden Abgasstroms angenommen hat und Temperaturmesswerte liefern kann, die mit der Abgastemperatur übereinstimmen. Während einer Erwärmung oder Abkühlung des Temperaturfühlers auf die Abgastemperatur weichen die Temperaturmesswerte deshalb systematisch von der tatsächlichen Abgastemperatur ab und nähern sich dieser nur mit einer zeitlichen Verzögerung an. Die Geschwindigkeit, mit der ein Temperaturfühler die Temperatur eines Abgasstroms annimmt, wird durch seine thermische Trägheit bestimmt, die von der Wärmekapazität des Temperaturfühlers und der Wärmeleitfähigkeit seiner den Temperatursensor umgebenden Komponenten abhängt. Durch Verwendung einer die thermische Trägheit des Temperaturfühlers charakterisierenden Kenngröße kann mit einem erfindungsgemäßen Verfahren aus Temperaturmesswerten des Sensors ein korrigierter Temperaturwert berechnet werden, welcher der Abgastemperatur besser entspricht.

Als Kenngröße der thermischen Trägheit des Temperaturfühlers kann eine Zeitkonstante verwendet werden, die charakterisiert, mit welcher Geschwindigkeit der Temperaturfühler eine geänderte Umgebungstemperatur annimmt. Eine solche Zeitkonstante kann für einen gegebenen Temperaturfühler durch geeignete Messungen ermittelt werden, beispielsweise indem der Temperaturfühler mit einer definierten Anfangstemperatur, beispielsweise 20°C, in einen heißen Abgasstrom bekannter Temperatur, beispielsweise 520°C, gebracht wird. In einem solchen Fall nähern sich die von dem Temperatursensor gelieferten Messwerte mit der Zeit exponentiell an die Abgastemperatur an. Als Kenngröße der thermischen Trägheit kann beispielsweise die Zeit verwendet werden, die vergeht, bis sich die Differenz zwischen der Temperatur des Temperaturfühlers und der Abgastemperatur auf einen vorgegebenen Teil der Anfangsdifferenz reduziert hat. Dabei ist es zweckmäßig, die Zeitkonstante als den Zeitraum zu definieren, der vergeht, bis die Differenz auf $1/e$ der Anfangsdifferenz abgesunken ist. Dabei ist $e$ die eulersche Zahl, die etwa 2,718 beträgt, so dass als Zeitkonstante vorteilhaft die Zeit verwendet werden kann, bei welcher nach einer sprunghaften Änderung der Abgastemperatur der Sensor 63% des Sprungs nachvollzogen hat.

Strenggenommen hängt die so ermittelte Zeitkonstante auch von der Dichte und Strömungsgeschwindigkeit des Abgasstroms ab. Für praktische Zwecke sind die sich bei unterschiedlicher Motorlast und Motordrehzahlen ergebenden Unterschiede in der pro Zeiteinheit an einem Temperaturfühler vorbei strömenden Abgasmenge in der Regel vernachlässigbar. Zweckmäßigerweise wird die verwendete Kenngröße der thermischen Trägheit des Messfühlers deshalb an einem Abgasstrom bestimmt, der sich bei einem typischen Motorzustand ergibt, beispielsweise bei mittlerer Drehzahl und mittlerer Motorlast.

Bevorzugt wird der korrigierte Temperaturwert berechnet wird, indem zu einem Temperaturmesswert ein Korrekturterm addiert wird, welcher proportional zu einer Abweichung von einem vorhergehenden Temperaturwert ist und unter Verwendung der Kenngröße der thermischen Trägheit berechnet wird, beispielsweise durch Multiplikation mit der Kenngröße. Bevorzugt ist der Korrekturterm umgekehrt proportional zu der Zeitspanne, welche zwischen den beiden Temperaturmesswerten liegt, zu deren Differenz der Korrekturterm proportional ist.

Weitere Einzelheiten und Vorteile der Erfindung werden an einem Ausführungsbeispiel unter Bezugnahme auf die beigefügten Zeichnungen erläutert. Es zeigen:

Figur 1   das Aufheizverhalten von zwei unterschiedlichen Temperaturfühlern bei einer sprunghaften Änderung der Temperatur eines umgebenden Gasstroms; und

Figur 2   für zwei unterschiedliche Temperaturfühler den Verlauf der in einem Abgas- strom gemessenen Temperaturmesswerte sowie den Verlauf der Abgastem- peratur und die Abweichung eines korrigierten Temperaturwerts, erfindungs- gemäß berechnet wurde, von der Abgastemperatur.

Zur Ermittlung der Abgastemperatur eines Fahrzeugmotors wird mit einem Temperaturfühler, der einen Temperatursensor und ein den Temperatursensor umgebendes Schutzrohr, das in einen Abgasstrom hineinragt, aufweist, eine Serie von Temperaturmesswerten erzeugt. Aus mehreren Temperaturmesswerten, die zeitlich aufeinanderfolgen, wird unter Verwendung einer Kenngröße der thermischen Trägheit des Temperaturfühlers ein korrigierter Temperaturwert berechnet.

Als Kenngröße der thermischen Trägheit des Temperaturfühlers wird eine Zeitkonstante verwendet, die charakterisiert, mit welcher Geschwindigkeit der Temperaturfühler eine geänderte Umgebungstemperatur annimmt. Die Zeitkonstante kann beispielsweise bestimmt werden, indem ein Temperaturfühler mit bekannter Anfangstemperatur in einen Abgasstrom konstanter Temperatur gebracht wird, so dass sich die Temperatur des Temperaturfühlers und damit die von ihm gelieferten Messwerte langsam an die geänderte Umgebungstemperatur annähern.

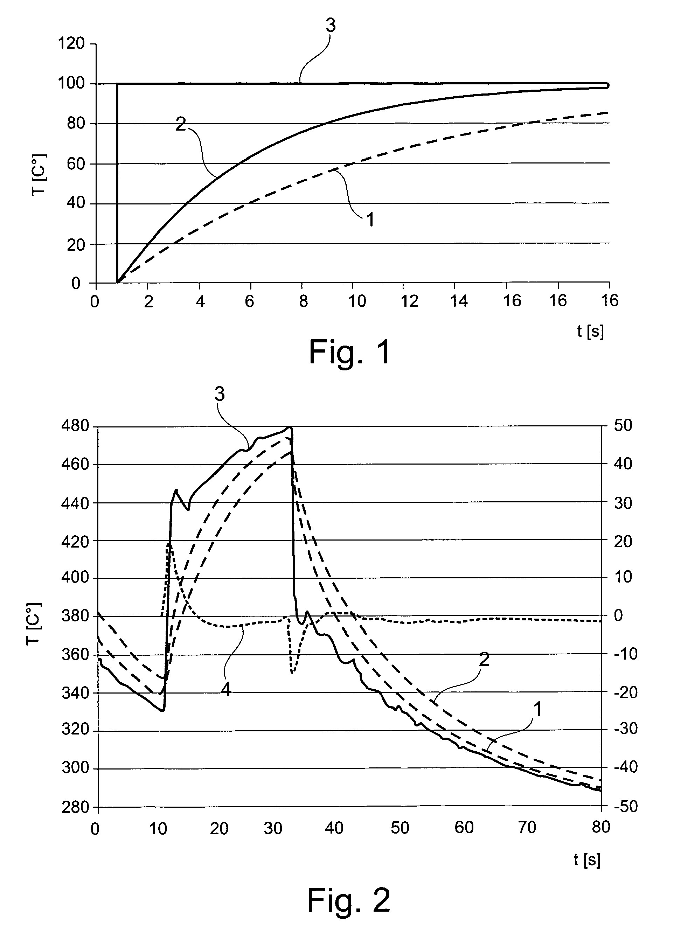

In Figur 1 ist beispielhaft für zwei unterschiedliche Temperaturfühler der Temperaturverlauf bei einer sprunghaften Änderung der Umgebungstemperatur dargestellt. In Figur 1 gibt die Ordinate die Temperatur T in °C und die Abszisse die Zeit t in Sekunden an. Als Kurve 1 ist der Temperaturverlauf für einen ersten Temperaturfühler und als Kurve 2 der Temperaturverlauf für einen zweiten Temperaturfühler, der eine kleinere thermische Trägheit hat, dargestellt. Die Umgebungstemperatur ist in Figur 1 durch die Stufenfunktion 3 dargestellt. Dabei ist deutlich zu erkennen, dass die Umgebungstemperatur zum Zeitpunkt t = 1 s von 0°C auf 100°C springt.

Zum Zeitpunkt t = 1 Sekunde beträgt der Unterschied zwischen der Temperatur der beiden Temperaturfühler und der Umgebungstemperatur also 100°C. Nach etwa 10 Sekunden ist die Temperaturdifferenz für den ersten Temperaturfühler auf 37%, also 1/e des Anfangswertes, abgesunken. Nach 10 Sekunden hat der erste Temperaturfühler somit 63% der sprunghaften Änderung der Abgastemperatur nachvollzogen. Die Zeitkonstante τ des ersten Temperaturfühlers beträgt demnach 10 Sekunden.

Der zweite Temperaturfühler hat eine geringere thermische Trägheit und deshalb bereits nach etwa 5 Sekunden 63% der sprunghaften Änderung der Umgebungstemperatur nachvollzogen. Die Differenz zwischen der Temperatur des zweiten Temperaturfühlers und der Umgebungstemperatur ist also schon nach 5 Sekunden auf den (1/e)-ten Teil der ursprünglichen Temperaturdifferenz von 100 K abgesunken. Die Zeitkonstante τ des zweiten Temperaturfühlers beträgt deshalb 5 Sekunden.

Im Betrieb erzeugen die Temperaturfühler eine Serie von Temperaturmesswerten $T_1, T_2, T_3 ... T_{n-1}, T_n$, wobei die einzelnen Temperaturmesswerte jeweils für Zeitpunkte $t_1, t_2, t_3 ... t_{n-1}, t_n$ gemessen werden. Der Index n ist dabei eine beliebige natürliche Zahl, da die Temperaturmesswerte fortlaufend erzeugt werden. Unter Verwendung einer Kenngröße der thermischen Trägheit des Temperaturfühlers, beispielsweise der Zeitkonstanten τ, kann dann ein korrigierter Temperaturwert $T_{kor}$ berechnet werden, der näher an der Abgastemperatur liegt. Beispielsweise kann der korrigierte Temperaturwert für den Zeitpunkt $t_n$ gemäß der folgenden Gleichung berechnet werden:

$$T_{kor} = T_n + \Delta T \cdot \tau/\Delta t$$

Dabei ist $T_n$ der für den Zeitpunkt $t_n$ gemessene Temperaturmesswert, ΔT die Differenz zwischen den aufeinanderfolgenden Temperaturmesswerten $T_n$ und $T_{n-1}$, also $\Delta T = T_n - T_{n-1}$, und Δt die Differenz zwischen den aufeinanderfolgenden Zeitpunkten $t_n$ und $t_{n-1}$, also $\Delta t = t_n - t_{n-1}$.

Mit der vorstehenden Gleichung wird ein korrigierter Temperaturwert berechnet, indem zu einem Temperaturmesswert ein Korrekturterm, nämlich $\Delta T \cdot \tau/\Delta t$, addiert wird. Dieser Korrekturterm ist proportional zu einer Abweichung von einem vorgehenden Temperaturwert und proportional zu der Kenngröße der thermischen Trägheit des Temperaturfühlers. Der Korrekturterm ist zudem umgekehrt proportional zu der Zeitspanne Δt, welche zwischen den beiden Temperaturmesswerten liegt, zu deren Differenz ΔT der Korrekturterm proportional ist.

Die von einem im Abgasstrang eines Fahrzeugs eingesetzten Temperaturfühler gelieferten Messsignale sind häufig verrauscht und durch Störsignale beeinträchtigt. Bevorzugt werden deshalb die zur Berechnung des korrigierten Temperaturwerts verwendeten Temperaturmesswerte durch Filterung von Rohdaten, die von dem Temperatursensor, beispielsweise einem elektrischen Messwiderstand oder einem Thermoelement, geliefert werden, ermittelt. Beispielsweise kann bei der Filterung von Rohdaten ein Temperaturmesswert durch Zusammenfassen von mehreren aufeinanderfolgenden Rohdatenwerten gebildet werden. Auf diese Weise können zufällige Fluktuationen der Messwerte reduziert werden. Beispielsweise kann aus jeweils 3 aufeinanderfolgenden Rohdaten ein Temperaturmesswert als deren arithmetisches Mittel gebildet werden.

Vorteilhaft können durch Filterung von Rohdaten auch Ausreißer, also offensichtlich fehlerhafte Messwerte, entfernt werden, beispielsweise indem Rohdaten, die mehr als einen vorgegebenen Schwellenwert von einem vorausgehenden Messwert abweichen, ignoriert werden. Wegen seiner thermischen Trägheit kann sich die Temperatur eines Temperaturfühlers nämlich nicht beliebig schnell ändern, so dass die maximal mögliche Änderung zwischen zwei aufeinanderfolgenden Messsignalen begrenzt ist. Falls mit einem entsprechenden Filter unplausible Sensorsignale erkannt und aus den Rohdaten entfernt werden, wird dies bevorzugt vor weiteren Schritten zur Filterung und Aufbereitung der Rohdaten vorgenommen.

In Figur 2 geben die Kurven 1 und 2 den Verlauf von Temperaturmesswerten wieder, die mit im Abgasstrang eines Fahrzeugs installierten Temperaturfühlern gemessen wurden. Die linke Ordinate gibt dazu die Temperatur T in °C, die Abszisse die Zeit t in Sekunden an. In Figur 2 ist zusätzlich durch die Kurve 3 der Verlauf der Abgastemperatur angegeben. Aus der Kurve 1, also Temperaturmesswerten des entsprechenden Temperaturfühlers, und der Kenngröße seiner thermischen Trägheit wurden korrigierte Temperaturwerte berechnet. Die Kurve 4 gibt die Abweichung der korrigierten Temperaturwerte von der Abgastemperatur an. Die Höhe der Abweichung ist dabei an der rechten Ordinate zu erkennen, welche die Temperaturabweichung in Kelvin angibt.

Der Verlauf der Kurve 4 zeigt dabei, dass die korrigierten Temperaturwerte wesentlich besser mit der tatsächlichen Abgastemperatur übereinstimmen als die Temperaturmesswerte der Temperaturfühler. Insbesondere ist zu erkennen, dass die korrigierten Temperaturwerte nur während einer kurzen Zeit nach einer sprunghaften Temperaturänderung von der realen Abgastemperatur abweichen.

Dies zeigt, dass mit dem beschrieben Verfahren aus den Messwerten eines thermisch trägen Temperaturfühlers die Abgastemperatur mit großer Genauigkeit berechnet werden kann. Praktisch bedeutet dies, dass ein thermisch träger Temperaturfühler durch das beschriebene Verfahren in einen Temperaturfühler ohne thermische Trägheit umgewandelt werden kann. Eine weitere Anwendung des Verfahrens besteht darin, korrigierte Temperaturwerte zu berechnen, die nicht die Abgastemperatur wiedergeben, sondern Temperaturmesswerte eines anderen Temperaturfehlers mit einer größeren oder kleineren thermischen Trägheit zu simulieren. Dazu wird in der vorstehenden Gleichung die Zeitkonstante $\tau$ durch die Differenz der Zeitkonstanten der beiden Temperaturfühler ersetzt.

Das erfindungsgemäße Verfahren kann beispielsweise von einem Motorsteuergerät eines Kraftfahrzeugs durchgeführt werden. Möglich ist es aber auch, das Verfahren mit einer an dem Temperaturfühler angebrachten Auswerteschaltung durchzuführen. Ein hierfür geeigneter Temperaturfühler kann beispielsweise wie der aus der DE 10 2006 034 284 B3 bekannte Temperaturfühler ausgebildet sein und zusätzlich eine Auswertschaltung tragen, die im Betrieb das beschriebene Verfahren ausführt. Ein solcher Temperaturfühler hat einen Temperatursensor und ein ihn umgebendes Schutzrohr. Der Temperatursensor ist in dem Schutzrohr in einem Füllstoff eingebettet. Als Füllstoff kann beispielsweise ein isolierendes Pulver oder eine Vergussmasse verwendet werden. Die Auswerteschaltung kann als ASIC kostengünstig ausgeführt werden.

Vorteilhaft können die mit einem ASIC ausgebildeten Temperaturfühler über einen Datenbus an ein Motorsteuergerät angeschlossen werden. Besonders vorteilhaft ist dabei, dass mit mehreren Temperaturfühlern die Abgastemperatur an unterschiedlichen Stellen im Abgasstrang eines Fahrzeugs gemessen werden kann, wobei die einzelnen Temperaturfühler jeweils an einen gemeinsamen Datenbus angeschlossen sind, so dass das Motorsteuergerät nur einen einzigen Port benötigt, um Temperaturdaten von mehreren Temperaturfühlern zu erhalten.

Indem mehrere derartige Temperaturfühler zu einem System verbunden werden, kann vorteilhaft die Zuverlässigkeit des Systems erhöht werden. Insbesondere kann nämlich eine Fehlfunktion eines einzelnen Temperaturfühlers durch Vergleich der Temperaturmesswerte der einzelnen Temperaturfühler erkannt werden. Nach längerem Abstellen des Motors sollten nämlich alle Temperaturfühler des Fahrzeugs sich auf die Umgebungstemperatur abgekühlt haben, also übereinstimmende Temperaturmesswerte liefern. Eine Fehlfunktion eines einzelnen Temperaturfühlers kann deshalb erkannt werden, indem nach einem längeren Parken des Fahrzeugs die Temperaturmesswerte der einzelnen Temperaturfühler miteinander verglichen werden.

Häufig beruht eine Fehlfunktion eines Temperaturfühlers darauf, dass dessen Temperatursensor einer Drift unterliegt. Beispielsweise kann bei einem Temperatursensor, der als Messwiderstand ausgebildet ist, alterungsbedingt eine Zunahme des Widerstands beobachtet werden, so dass das Messsignal verfälscht wird. In einem solchen Fall kann ein Temperaturfühler, der eine auffällige Abweichung von den Temperaturmesswerten der übrigen Temperaturfühler zeigt, mit den Temperaturmesswerten der anderen Temperaturfühler rejustiert werden. Beispielsweise kann für die Justierung des abweichenden Temperaturfühlers das arithmetische Mittel der Messwerte der übrigen Temperaturfühler als zutreffende Temperatur angenommen und der eine abweichende Temperatur liefernde Temperaturfühler auf diesen Mittelwert justiert werden.

Wichtig ist dabei, dass eine solche Funktionsüberprüfung der Temperaturfühler und eine eventuelle Rejustierung nur durchgeführt werden kann, nachdem das Fahrzeug für mehr als eine vorgegebene Zeitspanne parkt. Diese vorgegebene Zeitspanne muss ausreichend groß sein, damit sich alle Temperaturfühler auf die Umgebungstemperatur des Fahrzeugs abkühlen können. Bevorzugt beträgt die Zeitspanne mindestens 6 Stunden, besonders bevorzugt mindestens 12 Stunden.

**Patentansprüche**

1. Verfahren zur Ermittlung der Abgastemperatur eines Fahrzeugmotors mittels eines Temperaturfühlers, der einen Temperatursensor und ein den Temperatursensor umgebendes Schutzrohr, das in einen Abgasstrom hineinragt, aufweist, wobei mit dem Temperaturfühler eine Serie von Temperaturmesswerten erzeugt wird, **dadurch gekennzeichnet, dass** aus mehreren Temperaturmesswerten, die zeitlich aufeinanderfolgen, unter Verwendung einer Kenngröße der thermischen Trägheit des Temperaturfühlers ein korrigierter Temperaturwert berechnet wird.

2. Verfahren nach Anspruch 1, **dadurch gekennzeichnet, dass** die Kenngröße eine Zeitkonstante ist, die charakterisiert, mit welcher Geschwindigkeit der Temperaturfühler eine geänderte Umgebungstemperatur annimmt.

3. Verfahren nach einem der vorstehenden Ansprüche, **dadurch gekennzeichnet, dass** der korrigierte Temperaturwert berechnet wird, indem zu einem Temperaturmesswert ein Korrekturterm addiert wird, welcher proportional zu einer Abweichung von einem vorhergehenden Temperaturwert ist.

4. Verfahren nach Anspruch 3, **dadurch gekennzeichnet, dass** der Korrekturterm proportional zu der Kenngröße ist.

5. Verfahren nach Anspruch 3 oder 4, **dadurch gekennzeichnet, dass** der Korrekturterm umgekehrt proportional zu der Zeitspanne ist, welche zwischen den beiden Temperaturmesswerten liegt, zu deren Differenz der Korrekturterm proportional ist.

6. Verfahren nach einem der vorstehenden Ansprüche, **dadurch gekennzeichnet, dass** die Temperaturmesswerte durch Filterung von Rohdaten, die von dem Temperatursensor geliefert werden, ermittelt werden.

7. Verfahren nach einem der vorstehenden Ansprüche, **dadurch gekennzeichnet, dass** der korrigierte Temperaturwert $T_{kor}$ aus zwei aufeinander folgenden Temperaturmesswerten $T_n$ und $T_{n-1}$, die für Zeitpunkte $t_n$ und $t_{n-1}$ ermittelt wurden, und der Kenngröße $\tau$ zu $T_{kor} = T_n + \Delta T \cdot \tau/\Delta t$ berechnet wird, wobei $\Delta T$ die Differenz zwischen den aufeinanderfolgenden Temperaturmesswerten $T_n$ und $T_{n-1}$ und $\Delta t$ die Differenz zwischen den aufeinanderfolgenden Zeitpunkten $t_n$ und $t_{n-1}$ ist.

8. Temperaturfühler mit einem Temperatursensor und einem den Temperatursensor umgebenden Schutzrohr, **gekennzeichnet durch** eine Auswerteschaltung, die im Betrieb ein Verfahren nach einem der vorstehenden Ansprüche ausführt und einen korrigierten Temperaturwert liefert.

9. Temperaturfühler nach Anspruch 8, **dadurch gekennzeichnet, dass** der Temperatursensor in dem Schutzrohr von einem Füllstoff umgeben ist.

10. Temperaturfühler nach Anspruch 8 oder 9, **dadurch gekennzeichnet, dass** die Auswerteschaltung ein ASIC ist.

11. System mit mehreren Temperaturfühlern nach einem der Ansprüche 8 bis 10, **dadurch gekennzeichnet, dass** die Temperaturfühler über einen gemeinsamen Datenbus an ein Motorsteuergerät angeschlossen sind.

12. System nach Anspruch 11, **dadurch gekennzeichnet, dass** die Temperaturfühler im Abgasstrang des Fahrzeugs installiert sind.

13. System nach Anspruch 11 oder 12, **dadurch gekennzeichnet, dass** nach einem Parken des Fahrzeugs für mehr als einen vorgegeben Zeitspanne, die bevorzugt mindestens 6 Stunden beträgt, durch Auswertung der Temperaturmesswerte der einzelnen Temperaturfühler überprüft wird, ob diese innerhalb eines vorgegebenen Toleranzbereichs übereinstimmen.

14. System nach Anspruch 13, **dadurch gekennzeichnet, dass** ein Temperaturfühler, der nach einem länger als die vorgegeben Zeitspanne andauernden Parken des Fahrzeugs eine auffällige Abweichung von den Temperaturmesswerten der anderen Temperaturfühler zeigt, mit den Temperaturmesswerten der anderen Temperaturfühler justiert wird.

Fig. 1

Fig. 2

**EP 2 267 424 A2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006034248 B3
- DE 102006034284 B3